# EUROPEAN PATENT APPLICATION

(11) **EP 4 489 486 A1**
(43) Date of publication of application: **08.01.2025**
(21) Application number: 22929350.1
(22) Date of filing: 03.03.2022
(51) Int. Cl.: H04W 68/00

(54) **METHOD AND APPARATUS FOR TRANSMITTING WAKE UP SIGNAL, AND DEVICE AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN); LI, Yanhua, Beijing 100085 (CN)
(74) Representative: Gunzelmann, Rainer
(86) International application number: PCT/CN2022/079108
(87) International publication number: WO 2023/164901

(57) **Abstract**

A method and apparatus for transmitting a wake up signal, and a readable storage medium, which are applied to the technical field of wireless communications. The method comprises: a network device sending a wake up signal to a user equipment, wherein the length of a cycle prefix of the wake up signal is the same as the length of a cycle prefix of a primary synchronization signal (PSS) or a secondary synchronization signal (SSS); and the user equipment receiving the wake up signal, which is sent by the network device, wherein the length of the cycle prefix of the wake up signal is the same as the length of the cycle prefix of the PSS or the SSS.

## Description

### TECHNICAL FIELD

The disclosure relates to a field of wireless communication technologies, particularly to a method and an apparatus for transmitting a wake up signal, and a readable storage medium.

### BACKGROUND

In wireless communication technologies, such as the 5th generation mobile communication technology (5G for short), in order to save a power consumption of a user equipment (UE), a primary transceiver may be put into a sleep state.

A network device may send a wake up signal (WUS), and the WUS may indicate to one or more UEs whether to be woken up for downlink listening. For example, the WUS includes 16 bits corresponding to 16 UEs, and each bit corresponds to one UE. When a bit position corresponding to a UE is 1, it indicates to wake up the UE, and the UE turns on the primary transceiver for receiving a downlink signal. When the bit position corresponding to the UE is 0, it indicates not to wake up the UE, and the UE puts the primary transceiver into the sleep state.

How to define a characteristic of the WUS is a technical problem to be solved.

### SUMMARY

The disclosure provides a method and an apparatus for transmitting a wake up signal, a readable storage medium.

A first aspect provides a method for receiving a wake up signal. The method is performed by a user equipment, and includes:

receiving a wake up signal sent by a network device, in which a cyclic prefix length of the wake up signal is the same as a cyclic prefix length of a primary synchronization signal (PSS) or a secondary synchronization signal (SSS).

In some possible implementations, the method further includes: receiving a system message sent by the network device, in which the system message includes information for indicating a power of the wake up signal.

In some possible implementations, an energy per resource element (EPRE) of the wake up signal is the same as an EPRE of the SSS.

In some possible implementations, a ratio of a power of the wake up signal to a power of the SSS is within a first range.

In some possible implementations, a ratio of a power of the wake up signal to a power of the PSS is within a second range.

In some possible implementations, a subcarrier spacing of the wake up signal is the same as a subcarrier spacing of the SSS.

In some possible implementations, receiving the wake up signal sent by the network device includes:
receiving, in an idle state, the wake up signal sent by the network device.

A second aspect provides a method for sending a wake up signal. The method is performed by a network device, and includes:
sending a wake up signal to a user equipment, in which a cyclic prefix length of the wake up signal is the same as a cyclic prefix length of a PSS or a SSS.

In some possible implementations, the method further includes:
sending a system message to the user equipment, in which the system message includes information for indicating a power of the wake up signal.

In some possible implementations, an EPRE of the wake up signal is the same as an EPRE of the SSS.

In some possible implementations, a ratio of the power of the wake up signal to a power of the SSS is within a first range.

In some possible implementations, a ratio of the power of the wake up signal to a power of the PSS is within a second range.

In some possible implementations, a subcarrier spacing of the wake up signal is the same as a subcarrier spacing of the SSS.

A third aspect provides a communication apparatus. The communication apparatus may be configured to perform the step, performed by the user equipment, in the first aspect or any possible design of the first aspect. The user equipment may implement functions of the above methods by means of a hardware structure, a software module, or a combination of the hardware structure and the software module.

When the communication apparatus according to the first aspect is implemented by the software module, the communication apparatus may include a transceiver module.

The transceiver module is configured to receive a wake up signal sent by a network device, in which a cyclic prefix length of the wake up signal is the same as a cyclic prefix length of a PSS or a SSS.

A fourth aspect provides a communication apparatus. The communication apparatus may be configured to perform the step, performed by the network device, in the second aspect or any possible design of the second aspect. The network device may implement the functions in the above methods by means of a hardware structure, a software module, or a combination of the hardware structure and the software module.

When the communication apparatus according to the second aspect is implemented by the software module, the communication apparatus may include a transceiver module.

The transceiver module is configured to send a wake up signal to a user equipment, in which a cyclic prefix length of the wake up signal is the same as a cyclic prefix length of a PS S or a SSS.

A fifth aspect provides a communication apparatus. The communication apparatus includes a processor and a memory. The memory is configured to store a computer program, and the processor is configured to execute the computer program to implement the first aspect or any possible design of the first aspect.

A sixth aspect provides a communication apparatus. The communication apparatus includes a processor and a memory. The memory is configured to store a computer program, and the processor is configured to execute the computer program to implement the second aspect or any possible design of the second aspect.

A seventh aspect provides a computer-readable storage medium storing an instruction (or refer to as a computer program, a program) which, when called and executed on a computer, enable the computer to execute the first aspect or any possible design of the first aspect.

An eighth aspect provides a computer-readable storage medium storing an instruction (or refer to as a computer program, a program) which, when called and executed on a computer, enable the computer to execute the second aspect or any possible design of the second aspect.

In the method, the user equipment may directly receive the wake up signal after listening to a synchronization signal block (SSB), without adjusting a parameter of the cyclic prefix length involved in baseband processing, which thus reduces a complexity for processing the wake up signal and saves an energy consumption.

In addition, a beneficial effect for setting the power of the wake up signal and the power of the synchronization signal within a certain range includes: after receiving the synchronization signal, the terminal may receive the wake up signal without performing an automatic gain control (AGC) adjustment or only with a small range of AGC adjustment.

In the method, after broadcasting the synchronization signal, the network device sends the wake up signal with a same cyclic prefix length as the PSS or the SSS, such that the user equipment may directly receive the wake up signal after listening to the SSB, without adjusting the parameter of the cyclic prefix length involved in the baseband processing, which thus reduces the complexity for processing the wake up signal and saves the energy consumption.

It is to be understood that, both the foregoing general description and the following detailed description are merely exemplary and explanatory, and do not limit the disclosure.

### BRIEF DESCRIPTION OF THE DRAWINGS

The accompanying drawings herein are used to provide a further understanding for the embodiments of the disclosure, and constitute a part of the disclosure. Exemplary embodiments of the embodiments of the disclosure and descriptions thereof are used to explain the embodiments of the disclosure, and do not constitute a limitation for the embodiments of the disclosure. In the accompanying drawings:

The accompanying drawings herein, which are incorporated in and constitute a part of this specification, illustrate embodiments consistent with the embodiments of the disclosure, and serve to explain the principle of the embodiments of the disclosure together with the specification.
FIG. 1 is a schematic diagram of a wireless communication system according to an embodiment of the disclosure.
FIG. 2 is a flow chart of a method for transmitting measuring configuration information according to an exemplary embodiment of the disclosure.
FIG. 3 is a flow chart of a method for receiving measuring configuration information according to an exemplary embodiment of the disclosure.
FIG. 4 is a flow chart of a method for receiving measuring configuration information according to an exemplary embodiment of the disclosure.
FIG. 5 is a flow chart of a method for sending measuring configuration information according to an exemplary embodiment of the disclosure.
FIG. 6 is a block diagram of an apparatus for receiving measuring configuration information according to an exemplary embodiment of the disclosure.
FIG. 7 is a block diagram of an apparatus for receiving measuring configuration information according to an exemplary embodiment of the disclosure.
FIG. 8 is a block diagram of an apparatus for sending measuring configuration information according to an exemplary embodiment of the present disclosure.
FIG. 9 is a block diagram of an apparatus for sending measuring configuration information according to an exemplary embodiment of the disclosure.

### DETAILED DESCRIPTION

The embodiments of the disclosure are further described in conjunction with the accompanying drawings and detailed implementations.

The embodiments will be described in detail herein, and examples of the embodiments are illustrated in the accompanying drawings. In the description with reference to the accompanying drawings, unless otherwise indicated, the same number in different drawings indicate the same or similar elements. The implementations described in the following exemplary embodiments do not represent all implementations consistent with the embodiments of the disclosure. Instead, they are merely examples of apparatuses and methods consistent with some aspects of the disclosure as detailed in the attached claims.

Terms employed in the embodiments of the disclosure is merely for a purpose of describing specific embodiments, and are not intended to limit the embodiments of the disclosure. As used in the embodiments of the disclosure and the attached claims, a singular forms "a" or "the" is also intended to include plural forms, unless the context clearly indicates otherwise. It should also be understood that the term "and/or" as used herein refers to and includes any or all possible combinations of one or more associated listed items.

It should be understood that although terms first, second, third and the like may be employed in the embodiments of the disclosure to describe various information, such information should not be limited to these terms. These terms are merely used to distinguish information of the same type from each other. For example, without departing from a scope of embodiments of the disclosure, first information may also be called second information, and similarly, second information may also be called first information. Depending on the context, word "if' and "as", as used herein, may be interpreted as "when" or "while" or "in response to determining".

Embodiments of the present disclosure are described in detail below, and examples of the embodiments are illustrated in the accompanying drawings, in which same or similar elements are indicated by same or similar reference numerals throughout. Embodiments described below with reference to the accompanying drawings are exemplary and are intended to explain the disclosure, and should not be construed as limiting the disclosure.

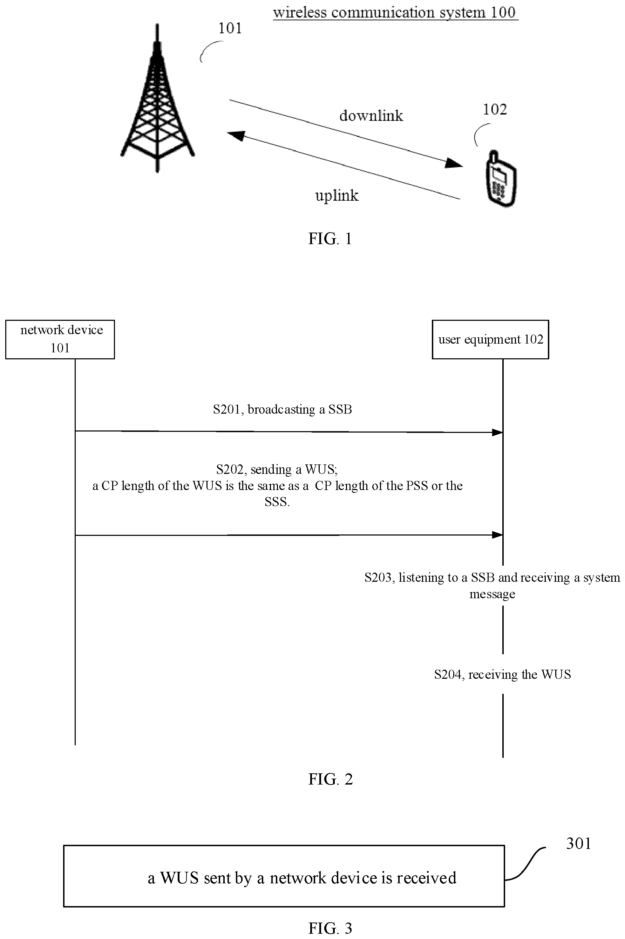

As illustrated in FIG. 1, a method for transmitting a wake up signal (WUS) according to the embodiments of the disclosure may be applied to a wireless communication system 100. The wireless communication system may include, but be not limited to, a network device 101 and a user equipment 102. The user equipment 102 is configured to support carrier aggregation. The user equipment 102 may be connected to a plurality of carrier units of the network device 101, in which the plurality of carrier units includes one primary carrier unit and one or more secondary carrier units.

It should be understood that, the above wireless communication system 100 may be applied to both a low-frequency scene and a high-frequency scene. An application scene of the wireless communication system 100 include, but is not limited to, a long term evolution (LTE) system, an LTE frequency division duplex (FDD) system, an LTE time division duplex (TDD) system, a worldwide interoperability for microwave access (WiMAX) communication system, a cloud radio access network (CRAN) system, a future 5th-Generation (5G) system, a new radio (NR) communication system or a public land mobile network (PLMN) system evolved in the future, etc.

The above user equipment 102 may be a user equipment (UE), a terminal, an access terminal, a terminal unit, a terminal station, a mobile station (MS), a remote station, a remote terminal, a mobile terminal, a wireless communication device, a terminal agent or a user device. The user equipment 102 may have a wireless receiving and sending function, and may perform a communication (such as wireless communication) with one or more network devices 101 of one or more communication systems and accept a network service provided by the network device 101. The network device 101 herein includes, but is not limited to, a base station illustrated in the drawing.

The user equipment 102 may be a cellular phone, a cordless phone, a session initiation protocol (SIP) phone, a wireless local loop (WLL) station, a personal digital assistant (PDA) device, a handheld device with a wireless communication function, a computing device with a wireless communication function or other processing device connected to a wireless modem, a vehicle-mounted device, a wearable device, a user equipment in a future 5G network, or a user equipment in a PLMN network evolved in the future, etc.

The network device 101 may be an access network device (or called an access network site). The access network device refers to a device that provides with a network access function, such as a radio access network (RAN) base station, etc. In detail, the network device may include a base station (BS) device, or include a BS device and a radio resource management device configured to control the BS device. The network device may also include a relay station (a relay device), an access point, and a BS in the future 5G network, a BS in the PLMN network evolved in the further, or an NR base station. The network device may be a wearable device or a vehicle-mounted device. The network device may also be a communication chip with a communication module.

For example, the network device 101 includes, but is not limited to, a gnodeB (gNB) in the 5G, an evolved node B (eNB) in the LTE system, a radio network controller (RNC), and a node B (NB) in a WCDMA system, a wireless controller in a CRAN system, a base station controller (BSC), a base transceiver station (BTS) in a GSM system or a CDMA system, a home BS (such as a home evolved node B, or a home node B, HNB), a baseband unit (BBU), a transmitting and receiving point (TRP), a transmitting point (TP) or a mobile switching center.

Embodiments of the disclosure provide a method for transmitting a WUS. FIG. 2 is a flow chart of a method for transmitting a WUS according to an exemplary embodiment. As illustrated in FIG. 2, the method includes the following steps 201~204.

At S201, the network device 101 broadcasts a synchronization signal block.

The synchronization signal block (SSB) consists of a primary synchronization signal (PSS), a secondary synchronization signal (SSS) and a physical broadcast channel (PBCH).

At S202, the network device 101 sends a WUS to the user equipment 102.

A cyclic prefix (CP) length of the WUS sent by the network device 101 to the user equipment 102 is the same as a CP length of the PSS or the SSS.

It may be understood that a sequence of S201 and S202 is not limited in the disclosure.

At S203, the user equipment 102 listens to a synchronization signal and receives a system message.

The system message received by the user equipment 102 includes information for indicating a power of the WUS, such that the network device may configure the power of the WUS in the system message flexibly.

At S204, the user equipment 102 receives the WUS.

In the embodiments of the disclosure, the user equipment 102 may directly receive the WUS after listening to the SSB, without adjusting a parameter of the CP length involved in baseband processing, which thus reduces a complexity for processing the WUS and saves an energy consumption.

In some possible implementations, an energy per resource element (EPRE) of the WUS is the same as an EPRE of the SSS, such that after listening to the SSS, the user equipment may continue to listen to the WUS without performing an automatic gain control (AGC) adjustment.

In some possible implementations, a ratio of a power of the WUS to a power of the SSS is within a first range, for example, the first range may be [-3 dB, 3 dB], such that the user equipment may continue to listen to the WUS, after listening to the SSS, by performing the AGC adjustment within the first range, without performing a large range of AGC adjustment, which thus reduces the complexity for processing the WUS and saves the energy consumption.

In some possible implementations, a ratio of the power of the WUS to a power of the PSS is within a second range, for example, the second range may be [-8 dB, 8 dB], such that the user equipment may continue to listen to the WUS, after listening to the PSS, by performing the AGC adjustment within the second range, without performing the large range of AGC adjustment, which thus reduces the complexity of processing the WUS and saves the energy consumption.

A beneficial effect for setting the power of the WUS and the power of the synchronization signal within a certain range includes: after receiving the synchronization signal, the terminal may receive the WUS without performing the AGC adjustment or only with a small range of AGC adjustment.

In some possible implementations, a subcarrier spacing (SCS) of the WUS is the same as a SCS of the SSS, such that the user equipment may directly receive the WUS after listening to the PSS and the SSS, without adjusting an parameter of the SCS involved in the baseband processing, which thus reduces the complexity for processing the WUS and saves the energy consumption.

Embodiments of the disclosure provide a method for receiving a WUS, and the method is performed by the user equipment. FIG. 3 is a flow chart of a method for receiving a WUS according to an exemplary embodiment. As illustrated in FIG. 3, the method includes the following step 301.

At S301, a WUS sent by a network device is received.

A CP length of the WUS received by the user equipment is the same as a CP length of a PSS or a SSS.

In some possible implementations, at S301, the user equipment receives, in an idle state, the WUS sent by the network device.

In the embodiments of the disclosure, the user equipment 102 may directly receive the WUS after listening to a SSB, without adjusting a parameter of the CP length involved in baseband processing, which thus reduces a complexity for processing the WUS and saves an energy consumption.

In some possible implementations, an EPRE of the WUS is the same as an EPRE of the SSS, such that after listening to the SSS, the user equipment may listen to the WUS based on the EPRE of the SSS, and may continue to listen to the WUS without an AGC adjustment.

In some possible implementations, a ratio of a power of the WUS to a power of the SSS is within a first range, for example, the first range may be [-3 dB, 3 dB], such that the user equipment may determine, after listening to the SSS, a power range of the WUS based on the power of the SSS and the first range, and listens to the WUS based on the power range of the WUS, which allows to continue to listen to the WUS by performing the AGC adjustment within the first range, without performing a large range of AGC adjustment, thereby reducing the complexity for processing the WUS and saving the energy consumption.

In some possible implementations, a ratio of the power of the WUS to a power of the PSS is within a second range, for example, the second range may be [-8 dB, 8 dB], such that the user equipment may determine, after listening to the PSS, the power range of the WUS based on the power of the PSS and the second range, and listens to the WUS based on the power range of the WUS, which allows to continue to listen to the WUS by performing the AGC adjustment within the second range, without performing a large range of AGC adjustment, thereby reducing the complexity for processing the WUS and saving the energy consumption.

In some possible implementations, a SCS of the WUS is the same as a SCS of the SSS, such that the user equipment may directly receive the WUS after listening to the PSS and the SSS, without adjusting an SCS parameter involved in the baseband processing, which thus reduces the complexity of processing the WUS and saves the energy consumption.

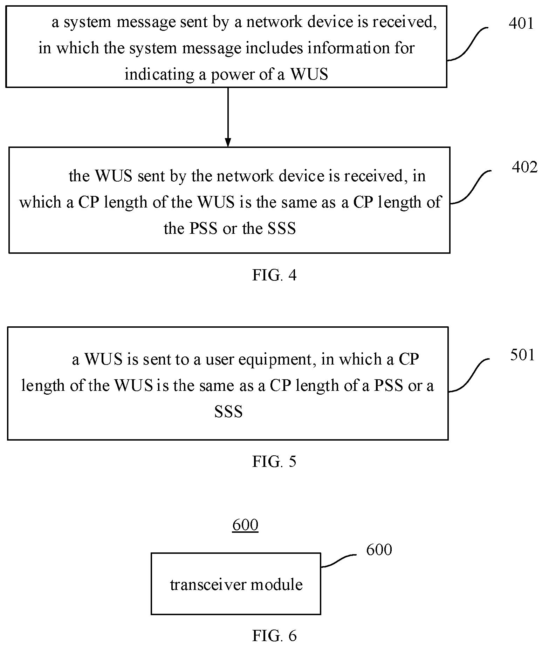

Embodiments of the disclosure provide a method for receiving a WUS, and the method is performed by the user equipment. FIG. 4 is a flow chart of a method for transmitting a WUS according to an exemplary embodiment. As illustrated in FIG. 4, the method includes the following steps 401~402.

At S401, a system message sent by a network device is received, in which the system message includes information for indicating a power of a WUS.

In some possible implementations, an EPRE of the WUS is the same as an EPRE of a SSS, such that after listening to the SSS, the user equipment may continue to listen to the WUS without performing an AGC adjustment.

In some possible implementations, a ratio of a power of the WUS to a power of the SSS is within a first range, for example, the first range may be [-3 dB, 3 dB], such that after listening to the SSS, the user equipment may continue to listen to the WUS by performing the AGC adjustment within the first range, without performing a large range of AGC adjustment, thereby reducing a complexity for processing the WUS and saving an energy consumption.

In some possible implementations, a ratio of the power of the WUS to a power of a PSS is within a second range, for example, the second range may be [-8 dB, 8 dB], such that after listening to the PSS, the user equipment may continue to listen to the WUS by performing the AGC adjustment within the second range, without performing a large range of AGC adjustment, thereby reducing the complexity for processing the WUS and saving the energy consumption.

At S402, the WUS sent by the network device is received, in which a CP length of the WUS is the same as a CP length of the PSS or the SSS.

It may be understood that a sequence of S401 and S402 is not limited in the disclosure. In some possible implementations, the user equipment receives the WUS sent by the network device based on the power indicated in the system message.

For example, when the information, in the system message, for indicating the power of the WUS indicates that the EPRE of the WUS is the same as the EPRE of the SSS, the user equipment listens to the WUS based on the EPRE of the SSS.

For example, when the information, in the system message, for indicating the power of the WUS indicates that the ratio of the power of the WUS to the power of the SSS is within the first range, the power range of the WUS is determined based on the power of the SSS and the first range, and the WUS is listened based on the power range of the WUS.

For example, when the information, in the system message, for indicating the power of the WUS indicates that the ratio of the power of the WUS to the power of the PSS is within the second range, the power range of the WUS is determined based on the power of the PSS and the second range, and the WUS is listened based on the power range of the WUS.

In some possible implementations, a SCS of the WUS is the same as a SCS of the SSS, which may allow the user equipment to receive the WUS directly after listening to the PSS and the SSS, without adjusting an SCS parameter involved in baseband processing, thereby reducing the complexity for processing the WUS and saving the energy consumption.

In some possible implementations, at S402, the user equipment receives, in an idle state, the WUS sent by the network device.

In the embodiments of the disclosure, the user equipment 102 may directly receive the WUS after listening to a SSB, without adjusting a parameter of the CP length involved in the baseband processing, which thus reduces the complexity for processing the WUS and saves the energy consumption.

Embodiments of the disclosure provide a method for sending a WUS, and the method is performed by the network device. FIG. 5 is a flow chart of a method for sending a WUS according to an exemplary embodiment. As illustrated in FIG. 5, the method includes the following step 501.

At S501, a WUS is sent to a user equipment, in which a CP length of the WUS is the same as a CP length of a PSS or a SSS.

In some possible implementations, before S501, the method further includes broadcasting a SSB.

In some possible implementations, before S501, the method further includes sending a system message to the user equipment, in which the system message includes information for indicating a power of the WUS.

In some possible implementations, an EPRE of the WUS is the same as an EPRE of the SSS, such that after listening to the SSS, the user equipment may continue to listen to the WUS without an AGC adjustment.

In some possible implementations, a ratio of a power of the WUS to a power of the SSS is within a first range, for example, the first range may be [-3 dB, 3 dB], such that after listening to the SSS, the user equipment may continue to listen to the WUS by performing the AGC adjustment within the first range, without performing a large range of AGC adjustment, thereby reducing a complexity for processing the WUS and saving an energy consumption.

In some possible implementations, a ratio of a power of the WUS to a power of the PSS is within a second range, for example, the second range may be [-8 dB, 8 dB], such that after listening to the PSS, the user equipment may continue to listen to the WUS by performing the AGC adjustment within the second range, without performing a large range of AGC adjustment, thereby reducing the complexity for processing the WUS and saving the energy consumption.

In some possible implementations, a SCS of the WUS is the same as a SCS of the SSS, which may allow the user equipment to directly receive the WUS after listening to the PSS and the SSS, without adjusting an SCS parameter involved in the baseband processing, thereby reducing the complexity for processing the WUS and saving the energy consumption.

In the embodiments of the disclosure, after broadcasting the synchronization signal, the network device sends the WUS with the CP length that is the same as the CP length of the PSS or the SSS, which allows the user equipment to receive the WUS directly after listening to the SSB, without adjusting a parameter of the CP length involved in the baseband processing, which thus reduces the complexity for processing the WUS and saves the energy consumption.

Based on a same concept as the above method embodiments, embodiments of the disclosure further provide a communication apparatus. The communication apparatus may have functions of the user equipment 102 in the above method embodiments, and is configured to execute the step, executed by the user equipment 102, according to the above embodiments. Such functions may be implemented by a hardware, by a software or by a hardware executing a corresponding software. The hardware or the software includes one or more modules corresponding to the above functions.

In a possible implementation, a communication apparatus 600 illustrated in FIG. 6 may be taken as the user equipment 102 involved in the above method embodiments, and is configured to execute the step, executed by the user equipment 102, according to the above method embodiments.

The communication apparatus 600 includes a transceiver module 1001.

The transceiver module 601 is configured to receive a WUS sent by a network device, in which a CP length of the WUS is the same as a CP length of a PSS or a SSS.

In a possible implementation, a system message sent by the network device is received. The system message includes information for indicating a power of the WUS.

In a possible implementation, an EPRE of the WUS is the same as an EPRE of the SSS.

In a possible implementation, a ratio of a power of the WUS to a power of the SSS is within a first range.

In a possible implementation, a ratio of a power of the WUS to a power of the PSS is within a second range.

In a possible implementation, a SCS of the WUS is the same as a SCS of the SSS.

In a possible implementation, the transceiver module 601 is further configured to receive, in an idle state, the WUS sent by the network device.

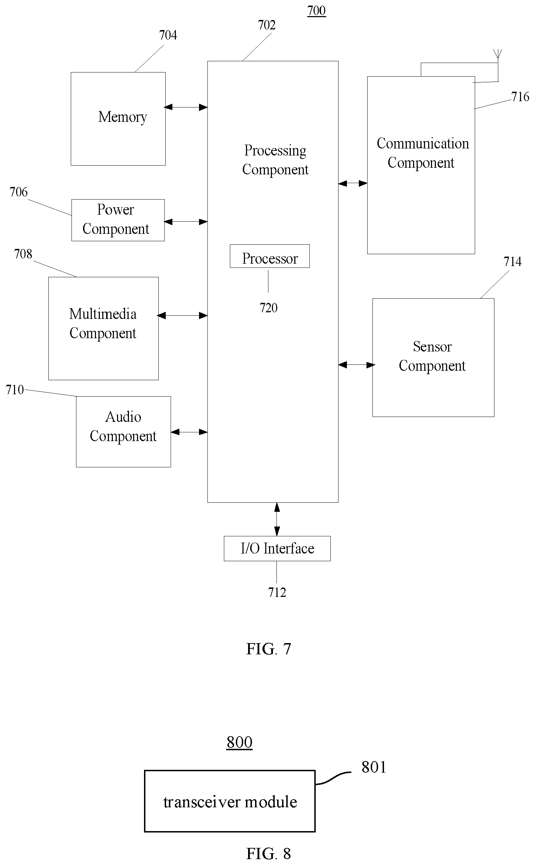

When the communication apparatus is the user equipment, a structure of the communication apparatus may also be illustrated in FIG. 7. FIG. 7 is a block diagram of an apparatus 700 for listening to a WUS according to an exemplary embodiment of the disclosure. For example, the apparatus 700 may be a mobile phone, a computer, a digital broadcasting terminal, a message sending and receiving equipment, a game controller, a tablet equipment, a medical equipment, a fitness equipment, or a personal digital assistant, etc.

Referring to FIG. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For example, the processing component 702 may include a multimedia module to facilitate the interaction between the multimedia component 708 and the processing component 702.

The memory 704 is configured to store various types of data to support the operation of the apparatus 700. Examples of such data include instructions for any applications or methods operated on the apparatus 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 706 provides power to various components of the apparatus 700. The power component 706 may include a power management system, one or more power sources, and any other components associated with generating, managing, and distributing power for the apparatus 700.

The multimedia component 708 includes a screen providing an output interface between the apparatus 700 and a user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of the touch or swipe action, but also detect a period of time and a pressure associated with the touch or swipe action. In some embodiments, the multimedia component 708 includes a front camera and/or a rear camera. The front camera and/or the rear camera may receive external multimedia date while the apparatus 700 is in an operation mode, such as a shooting mode or a video mode. Each of the front camera and the rear camera may be a fixed optical lens system or have focus length and optical zoom capability.

The audio component 710 is configured to output and/or input audio signals. For example, the audio component 710 includes a microphone (MIC) configured to receive an external audio signal when the apparatus 700 is in the operation mode, such as a call mode, a recording mode, and a speech recognition mode. The received audio signal may be further stored in the memory 704 or sent via the communication component 716. In some embodiments, the audio component 710 further includes a speaker to output the audio signals.

The I/O interface 712 provides an interface between the processing component 702 and a peripheral interface module. The peripheral interface module may be a keyboard, a click wheel, a button, and the like. These buttons may include, but are not limited to, a home button, a volume button, a starting button, and a locking button.

The sensor component 714 includes one or more sensors to provide state assessments of various aspects for the apparatus 700. For example, the sensor component 714 may detect the on/off state of the apparatus 700, relative positioning of components, e.g., a display and a keypad of the apparatus 700. The sensor component 714 may further detect the position change of the apparatus 700 or a component of the apparatus 700, a presence or absence of the user contacting with the apparatus 700, an orientation or an acceleration/deceleration of the apparatus 700, and a change in temperature of the apparatus 700. The sensor component 714 may include a proximity sensor configured to detect the presence of a nearby object without any physical contact. The sensor component 714 may also include an optical sensor, such as a CMOS or CCD image sensor, for use in an imaging application. In some embodiments, the sensor component 714 may also include an accelerometer sensor, a gyroscope sensor, a magnetic sensor, a pressure sensor, or a temperature sensor.

The communication component 716 is configured to facilitate wired or wireless communication between the apparatus 700 and other devices. The apparatus 700 may access to a wireless network based on a communication standard, such as Wi-Fi, 4G, or 5G, or a combination thereof. In an exemplary embodiment, the communication component 716 receives a broadcast signal or broadcast-related information from an external broadcast management system via a broadcast channel. In an exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above described methods.

Based on a same concept as the above method embodiments, embodiments of the disclosure further provide a communication apparatus. The communication apparatus may have functions of the network device 101 in the above method embodiments, and is configured to execute the step, executed by the network device 101, according to the above embodiments. Such functions may be implemented by a hardware, by a software or by a hardware executing a corresponding software. The hardware or the software includes one or more modules corresponding to the above functions.

In a possible implementation, a communication apparatus 800 illustrated in FIG. 8 may be taken as the network device 101 involved in the above method embodiments, and is configured to execute the step, executed by the network device 101, according to the above method embodiments.

The communication apparatus 800 illustrated in FIG. 8 includes a transceiver module 801, and the transceiver module 801 is configured to execute the step, executed by the network device 101, in the above method embodiments.

The transceiver module 801 is configured to send a WUS to a user equipment, in which a CP length of the WUS is the same as a CP length of a PSS or a SSS.

The transceiver module 801 is further configured to send a system message to the user equipment, in which the system message includes information for indicating a power of the WUS.

In a possible implementation, an EPRE of the WUS is the same as an EPRE of the SSS.

In a possible implementation, a ratio of a power of the WUS to a power of the SSS is within a first range.

In a possible implementation, a ratio of the power of the WUS to a power of the PSS is within a second range.

In a possible implementation, a SCS of the WUS is the same as a SCS of the SSS.

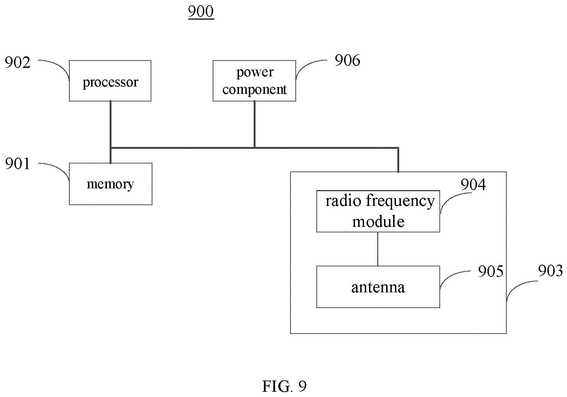

When the communication apparatus is the network device 101, the structure of communication apparatus may also be illustrated in FIG. 9. As illustrated in FIG. 9, an apparatus 900 includes a memory 901, a processor 902, a transceiver component 903, and a power supply component 906. The memory 901 is coupled to the processor 902 and may be configured to store programs and data necessary for the communication apparatus 900 to realize various functions. The processor 902 is configured to support the communication apparatus 900 to perform the corresponding functions in the above method, and such functions may be implements by calling the program stored in the memory 901. The transceiver component 903 may be a wireless transceiver and may be configured to support the communication apparatus 900 to receive and send a signaling and/or data via a wireless radio interface. The transceiver component 903 may also be called a transceiver unit or a communication unit. The transceiver component 903 may include a radio frequency module 904 and one or more antennas 905. The radio frequency module 904 may be a remote radio unit (RRU), and may be configured to a transmission of a radio frequency signal and a conversion between the radio frequency signal and a baseband signal. The one or more antennas 905 may be configured to perform a radiation and a reception of the radio frequency signal.

When the communication apparatus 900 needs to send data, the processor 902 may perform baseband processing on the data to be sent, and then output a baseband signal to a radio frequency unit. The radio frequency unit performs radio frequency processing on the baseband signal and then transmits the radio frequency signal in the form of electromagnetic wave through the antenna. When the data is sent to the communication apparatus 900, the radio frequency unit receives the radio frequency signal through the antenna, converts the radio frequency signal into the baseband signal, and outputs the baseband signal to the processor 902. The processor 902 converts the baseband signal into the data and processes the data.

Other implementation of embodiments of the disclosure will be apparent to those skilled in the art upon consideration of the specification and practice of the disclosure disclosed here. This application is intended to cover any variations, uses, or adaptations of embodiments of the disclosure following general principles of the disclosure and including such departures from the disclosure as come within known or customary practice in the art. It is intended that the specification and embodiments be considered as exemplary only, with a true scope and spirit of embodiments of the disclosure being indicated by the following claims.

It should be understood that the disclosure is not limited to the precise structure that has been described above and illustrated in the accompanying drawings, and that various modifications and changes can be made without departing from the scope thereof. It is intended that the scope of embodiments of the disclosure only be limited by the attached claims.

### Industrial Utility

The user equipment may receive the WUP directly after listening to the SSB, without adjusting the parameter of the CP length parameter involved in the baseband processing, which thus reduce the complexity for processing the WUS and saves the energy consumption.

## Claims

1. A method for receiving a wake up signal, performed by a user equipment, comprising:
receiving a wake up signal sent by a network device, wherein a cyclic prefix length of the wake up signal is the same as a cyclic prefix length of a primary synchronization signal (PSS) or a secondary synchronization signal (SSS).

2. The method of claim 1, further comprising:
receiving a system message sent by the network device, wherein the system message comprises information for indicating a power of the wake up signal.

3. The method of claim 1 or 2, wherein an energy per resource element of the wake up signal is the same as an energy per resource element of the SSS.

4. The method of claim 1 or 2, wherein a ratio of a power of the wake up signal to a power of the SSS is within a first range.

5. The method of claim 1 or 2, wherein a ratio of a power of the wake up signal to a power of the PSS is within a second range.

6. The method of claim 1, wherein a subcarrier spacing of the wake up signal is the same as a subcarrier spacing of the SSS.

7. The method of claim 1, wherein receiving the wake up signal sent by the network device comprises:
receiving, in an idle state, the wake up signal sent by the network device.

8. A method for sending a wake up signal, performed by a network device, comprising:
sending a wake up signal to a user equipment, wherein a cyclic prefix length of the wake up signal is the same as a cyclic prefix length of a primary synchronization signal (PSS) or a secondary synchronization signal (SSS).

9. The method of claim 8, further comprising:
sending a system message to the user equipment, wherein the system message comprises information for indicating a power of the wake up signal.

10. The method of claim 8, wherein an energy per resource element of the wake up signal is the same as an energy per resource element of the SSS.

11. The method of claim 8, wherein a ratio of a power of the wake up signal to a power of the SSS is within a first range.

12. The method of claim 8, wherein a ratio of a power of the wake up signal to a power of the PSS is within a second range.

13. The method of claim 8, wherein a subcarrier spacing of the wake up signal is the same as a subcarrier spacing of the SSS.

14. An apparatus for receiving a wake up signal, comprising:
a transceiver module, configured to receive a wake up signal sent by a network device, wherein a cyclic prefix length of the wake up signal is the same as a cyclic prefix length of a primary synchronization signal (PSS) or a secondary synchronization signal (SSS).

15. An apparatus for sending a wake up signal, comprising:
a transceiver module, configured to send a wake up signal to a user equipment, wherein a cyclic prefix length of the wake up signal is the same as a cyclic prefix length of a primary synchronization signal (PSS) or a secondary synchronization signal (SSS).

16. A communication apparatus, comprising:
a memory configured to store a computer program; and
a processor configured to execute the computer program to implement the method according to any one of claims 1 to 7.

17. A communication apparatus, comprising:
a memory configured to store a computer program; and
a processor configured to execute the computer program to implement the method according to any one of claims 8 to 14.

18. A computer-readable storage medium having stored therein an instruction that, when called and executed on a computer, enables the computer to execute the method according to any one of claims 1 to 7.

19. A computer-readable storage medium having stored therein an instruction that, when called and executed on a computer, enables the computer to execute the method according to any one of claims 8 to 14.
